# EUROPÄISCHE PATENTSCHRIFT

(11) **EP 1 144 491 B1**
(45) Veröffentlichungstag und Bekanntmachung des Hinweises auf die Patenterteilung: **18.09.2002**
(21) Anmeldenummer: 99963504.8
(22) Anmeldetag: 11.12.1999
(51) Int. Cl.: C08J 9/00, C08J 9/16, C08J 9/18, C08L 23/10

(54) **EXPANDIERTE POLYPROPYLEN-PARTIKEL**
EXPANDED POLYPROPYLENE PARTICLES
PARTICULES DE POLYPROPYLENE EXPANSEES

(30) Priorität: 22.12.1998 DE 19859418
(43) Veröffentlichungstag der Anmeldung: 17.10.2001
(73) Patentinhaber: BASF AKTIENGESELLSCHAFT, 67056 Ludwigshafen (DE)
(72) Erfinder: BRAUN, Frank, D-67063 Ludwigshafen (DE); GLÜCK, Guiscard, D-55129 Mainz (DE); HAHN, Klaus, D-67281 Kirchheim (DE); DE GRAVE, Isidoor, D-67157 Wachenheim (DE); TATZEL, Hermann, D-69469 Weinheim (DE)
(86) Internationale Anmeldenummer: EP9909832
(87) Internationale Veröffentlichungsnummer: WO00037546

(56) Entgegenhaltungen:
- US-A- 4 496 627
- PATENT ABSTRACTS OF JAPAN vol. 009, no. 233 (C-304), 19. September 1985 (1985-09-19) & JP 60 090227 A (NIPPON STYREN PAPER KK), 21. Mai 1985 (1985-05-21)

## Beschreibung

Die Erfindung betrifft expandierte Polypropylen-Partikel mit einer Dichte von 5 bis 200 g/l und einem Partikeldurchmesser von 1 bis 10 mm auf Basis eines Propylenpolymerisats.

Expandierte Polypropylen (EPP)-Partikel werden in großtechnischem Maßstab zur Herstellung von Schaumstoff-Formteilen eingesetzt. Diese werden vorwiegend als elastische, stoßfeste Verpackungsmaterialien eingesetzt, die darüberhinaus auch wärmedämmende Eigenschaften haben. Ihre Wärmeleitfähigkeit ist aber für manche Anwendungszwecke noch zu hoch.

Nach dem Stand der Technik können Polyolefin-Schaumpartikel mit niedriger Wärmeleitfähigkeit hergestellt werden, indem Infrarotstrahlung reflektierende Metallpigmente wie Aluminiumpulver eingesetzt werden (DE-OS 195 05 266). Nachteilig an dieser Methode sind der hohe Preis und die eingeschränkte Verfügbarkeit der benötigten Pigmente. Der Erfindung lag also die Aufgabe zugrunde, EPP-Partikel bereitzustellen, die sich zu Schaumstoff-Formteilen mit verringerter Wärmeleitfähigkeit verarbeiten lassen.

Zur Herstellung von Schaumstoff-Formteilen aus EPP-Partikeln werden diese in eine Form eingefüllt, nach verschiedenen Methoden (siehe z.B. DE-A 3431245) weiter expandiert und mittels Wasserdampf oder Heißluft miteinander verschweißt. Dabei baut sich innerhalb des Formteils ein Druck auf. Um ein Aufplatzen der Schaumzellen zu verhindern, kann das Formteil nach üblichem Abkühlen aus der Form erst dann entnommen werden, wenn der Druck auf etwa 0,3 bar (Überdruck) abgefallen ist. Der Durchsatz bei der Formteilherstellung hängt also wesentlich von der Druckabbauzeit ab, so daß sich die weitere Aufgabe stellt, diese Druckabbauzeit zu verkürzen.

Diese Aufgaben werden gelöst durch EPP-Partikel, die 0,002 bis 20 Gew.-% Graphitpartikel in homogener Verteilung enthalten. Zur Erniedrigung der Wärmeleitfähigkeit sind Mengen von 1 bis 20 Gew.-% bevorzugt, insbesondere von 2 bis 10 Gew.-%, für die Kühlzeitverkürzung 0,002 - 10 Gew.-%, insbesondere 0,005 bis 5 Gew.-%. Bei der Formteilherstellung tritt bei zu hohem Graphitgehalt Schwindung, d.h. ein Schrumpfen der Formteile nach deren Herstellung auf. Soll das vermieden werden, dann muß die Graphitmenge niedrig gehalten werden. In diesem Fall sind Mengen von 0,002 bis 0,2 Gew.-% bevorzugt.

Propylenpolymerisate im Sinne der vorliegenden Erfindung sind Homopolypropylen und Randomcopolymere des Propylens mit bis zu 15, vorzugsweise 0,5 bis 12 Gew.-% Ethylen und/oder einem C₄-C₁₀-α-Olefin, vorzugsweise ein Copolymer von Propylen mit 0,5 bis 6 Gew.-% Ethylen oder Buten-1 oder ein Terpolymer aus Propylen, 0,5 bis 6 Gew.-% Ethylen und 0,5 bis 6 Gew.-% Buten-1.

Die Propylenpolymerisate werden nach üblichen Verfahren mit Ziegler-Natta-Katalysatoren hergestellt und fallen dabei im allgemeinen als lineare Polymere an. Für das unten beschriebene Extrusionschaumverfahren sind auch verzweigte Propylenpolymerisate, z.B. nach EP-A 588 321 geeignet. Auch mit Metallocen-Katalysatoren hergestellte Propylenpolymerisate nach EP-A 611 795 können mit Vorteil eingesetzt werden. Diese Propylenpolymerisate werden nach üblichen Verfahren in der Schmelze, vorzugsweise auf einem Extruder mit dem Graphitpartikeln vermischt. Diese weisen vorzugsweise eine Teilchengröße von 1 bis 200 µm, insbesondere von 1 bis 50 µm auf. Auch Blähgraphit kann mit Vorteil eingesetzt werden.

Die Herstellung der erfindungsgemäßen EPP-Partikel erfolgt nach den an sich bekannten Imprägnier- bzw. Schaumextrusionsverfahren. Beim Imprägnierverfahren wird granuliertes, Graphitpartikel enthaltendes Polypropylen zusammen mit 1 bis 40, vorzugsweise 5 bis 30 Gew.-% eines flüchtigen Treibmittels in Wasser suspendiert. Als Treibmittel kommen Kohlenwasserstoffe, wie z.B. Butan, Pentan, Cyclopentan, Cyclohexan, Ethanol, ferner Gase wie Kohlendioxid, Edelgas, Luft oder Stickstoff in Frage, sowie Gemische dieser Treibmittel. Die Imprägnierung wird vorzugsweise in einem Rührreaktor bei Temperaturen von 100 bis 160°C unter einem Druck von 10 bis 100 bar bei Verweilzeiten zwischen 30 und 180 min durchgeführt. Anschließend wird entspannt, wobei die Schaumpartikel entstehen.

Beim Extrusionsverfahren wird in einem Extruder das Propylenpolymerisat, zusammen mit den Graphitpartikeln und 2 bis 30 Gew.-% Treibmittel bei 120 bis 240°C aufgeschmolzen, wobei dieses gelöst wird. Nach einer Verweilzeit von 0,5 bis 90 min wird das treibmittelhaltige Polymere unter Aufschäumen durch eine Düse ausgepreßt und granuliert.

Außer den Graphitpartikeln können dem Propylenpolymerisat übliche Zusatzstoffe, wie Farbstoffe, Pigmente, Keimbildner, Stabilisatoren, Flammschutzmittel, Gleitmittel und Antistatika zugesetzt werden.

Die erfindungsgemäßen EPP-Partikel weisen eine Dichte von 5 *bis* 200, vorzugsweise von 15 bis 120 g/l auf und einen Partikeldurchmesser von 1 bis 10 mm. Sie sind überwiegend geschlossenzellig mit einer Zellzahl von vorzugsweise 5 bis 500 Zellen pro mm.

Die EPP können nach üblichen Verfahren bei kurzer Druckabbauzeit mit Wasserdampf oder Heißluft zu Schaumstoff-Formteilen verschweißt werden, welche dort Anwendung finden, wo es neben den elastischen Eigenschaften auch auf eine gute Wärmedämmung ankommt. Als Beispiele seien die Kühlschrankisolierung und die Verpackung von Heizkreisverteilern angeführt, die zusammen mit dem Verpackungsmaterial montiert werden.

### Beispiel 1 (Vergleich)

In einem geschlossenen Rührreaktor wurden 60 Gew.-Teile eines granulatförmigen Propylen-Ethylen-Randomcopolymeren mit einem Ethylengehalt von ca. 2 Gew.-% und 2 Gew.-Teile Tricalciumphosphat in 165 Teilen Wasser dispergiert. Nach Zugabe von 12 Gew.-Teilen Butan wurde der Reaktor auf ca. 130°C aufgeheizt. Dabei stieg der Druck auf ca. 20 bar an. Anschließend wurde der Inhalt des Reaktors in einem Zwischenbehälter entspannt. Nach Entfernen des Tricalciumphosphats und Trocknung hatten die erhaltenen Schaumpartikel eine Schüttdichte von 16,8 g/L. Die Partikel wurden in eine geschlossene Form gegeben und mit Wasserdampf unter Druck zu Formteilen mit einer Dichte von 30 g/L verschweißt. Die Druckabbauzeit betrug 130 Sekunden, die Schwindung 2,4 %. Die Wärmeleitfähigkeit nach DIN 52612 wurde zu 40 mW/(m*K) bestimmt.

### Beispiel 2

Auf einem Extruder wurden 2 Gew.-% Graphit (Partikelgröße ca. 20 µm) in das Polymergranulat aus Beispiel 1 eingearbeitet. Die Imprägnierung wurde dann analog Beispiel 1 durchgeführt. Es wurden Schaumpartikel mit einer Schüttdichte von 17 g/L erhalten. Bei der Verarbeitung zu einem Formteil mit einer Dichte von 30 g/L wurde eine Druckabbauzeit von 50 Sekunden beobachtet. Die Schwindung betrug 3,5 %. Die Wärmeleitfähigkeit nach DIN 52612 betrug 34 mW/(m*K).

### Beispiel 3

Es wurden auf einen Extruder 0,05 Gew.-% Graphit (Partikelgröße ca. 20 µm) in das Polymergranulat aus Beispiel 1 eingearbeitet. Die Imprägnierung wurde analog Beispiel 1 durchgeführt. Es wurden Schaumpartikel mit einer Schüttdichte von 17,1 g/l erhalten. Bei der Verarbeitung zu einem Formteil mit einer Dichte von 30 g/L wurde eine Druckabbauzeit von 60 Sekunden beobachtet bei einer Schwindung von 2,5 %. Die Wärmeleitfähigkeit nach DIN 52612 betrug 39 mW/(m*K).

## Patentansprüche

1. Expandierte Polypropylen(EPP)-Partikel mit einer Dichte von 5 bis 200 g/1 und einem Partikeldurchmesser von 1 bis 10 mm, **dadurch gekennzeichnet, daß** sie 0,002 bis 20 Gew.-% Graphitpartikel in homogener Verteilung enthalten.

2. EPP-Partikel nach Anspruch 1, **dadurch gekennzeichnet, daß** das Propylenpolymerisat ausgewählt ist aus Homopolypropylen und einem Randomcopolymer von Propylen mit bis zu 15 Gew.-% Ethylen und/oder einem C₄-C₁₀-α-Olefin.

3. EPP-Partikel nach Anspruch 1, **dadurch gekennzeichnet, daß** der Graphit eine Teilchengröße von 1 bis 200 µm aufweist.

4. Verfahren zur Herstellung der EPP-Partikel nach Anspruch 1 durch Imprägnieren von Graphitpartikel enthaltendem Propylenpolymerisat-Granulat mit 2 bis 40 Gew.-% eines flüchtigen Treibmittels in wäßriger Suspension unter Druck bei Temperaturen von 100 bis 160°C und anschließendem Entspannen.

5. Verfahren zur Herstellung der EPP-Partikel nach Anspruch 1 durch Extrudieren des Propylenpolymerisats zusammen mit Graphitpartikeln und 2 bis 30 Gew.-% eines flüchtigen organischen Treibmittels bei Temperaturen von 120 bis 240°C und Granulieren des erhaltenen Schaumstrangs.

6. Verfahren zur Herstellung von Schaumstoff-Formteilen durch Verschweißen der EPP-Partikel nach Anspruch 1 in einer Form.

## Claims

1. Expanded polypropylene (EPP) beads having a density of from 5 to 200 g/l and a particle diameter of from 1 to 10 mm, which comprise from 0.002 to 20% by weight of graphite particles in a homogeneous distribution.

2. EPP beads as claimed in claim 1, wherein the propylene polymer is selected from homopolypropylene and a random copolymer of propylene with up to 15% by weight of ethylene and/or a C₄-C₁₀-α-olefin.

3. EPP beads according to claim 1, wherein the graphite has a particle size of from 1 to 200 µm.

4. A process for the production of EPP beads according to claim 1 by impregnation of propylene polymer granules comprising graphite particles with from 2 to 40% by weight of a volatile blowing agent in aqueous suspension under pressure at temperatures of from 100 to 160°C, followed by decompression.

5. A process for the production of EPP beads as claimed in claim 1 by extrusion of the propylene polymer together with graphite particles and from 2 to 30% by weight of a volatile organic blowing agent at temperatures of from 120 to 240°C, and granulation of the resultant foam extrudate.

6. A process for the production of foam moldings by fusing the EPP beads as claimed in claim 1 in a mold.

## Revendications

1. Particules de polypropylène expansé (EPP) ayant une densité de 5 à 200 g/l et un diamètre de particule de 1 à 10 mm, **caractérisées en ce qu'**elles contiennent 0,002 à 20% en poids de particules de graphite en répartition homogène.

2. Particules d'EPP suivant la revendication 1, **caractérisées en ce que** le polymère de propylène est choisi parmi un homopolypropylène et un copolymère aléatoire de propylène avec jusqu'à 15% en poids d'éthylène et/ou d'une α-oléfine en C₄-C₁₀.

3. Particules d'EPP suivant la revendication 1, **caractérisées en ce que** le graphite présente une taille de particule de 1 à 200 µm.

4. Procédé de préparation des particules d'EPP suivant la revendication 1, par imprégnation d'un produit de granulation à base de polymère de propylène contenant des particules de graphite avec 2 à 40% en poids d'un agent gonflant volatil en suspension aqueuse, sous pression, à des températures de 100 à 160°C, et par détente ultérieure.

5. Procédé de préparation des particules d'EPP suivant la revendication 1, par extrusion du polymère de propylène conjointement à des particules de graphite et à 2 jusqu'à 30% en poids d'un agent gonflant organique volatil, à des températures de 120 à 240°C, et par granulation de l'extrudé mousse obtenu.

6. Procédé de préparation de pièces façonnées en mousse par soudage des particules d'EPP suivant la revendication 1, dans une forme.
